# EUROPÄISCHE PATENTSCHRIFT

(11) **EP 1 350 962 B1**
(45) Veröffentlichungstag und Bekanntmachung des Hinweises auf die Patenterteilung: **21.01.2009**
(21) Anmeldenummer: 03006127.9
(22) Anmeldetag: 18.03.2003
(51) Int. Cl.: F16B 1/00, B60R 21/20, B62D 1/04

(54) **Baugruppe mit Rastelementen**
Modul assembly with locking key elements
Ensemble de modules à éléments d'encliquetage

(30) Priorität: 20.03.2002 DE 20204461 U
(43) Veröffentlichungstag der Anmeldung: 08.10.2003
(73) Patentinhaber: TRW Automotive Safety Systems GmbH, 63743 Aschaffenburg (DE)
(72) Erfinder: Schütz, Dominik, 63857 Waldaschaff (DE); Dietz, Frank, 63691 Ranstadt (DE)
(74) Vertreter: Prinz & Partner

(56) Entgegenhaltungen:
- EP-A- 1 138 558
- WO-A-98/29283
- US-A- 5 149 127

## Beschreibung

Die Erfindung betrifft eine Baugruppe aus einem ersten Bauteil mit wenigstens einem ersten Rastelement und aus einem zweiten Bauteil mit wenigstens einem zweiten Rastelement.

Durch Rastverbindungen sind Bauteile auf einfache und schnelle Art miteinander verbindbar. Es ist jedoch nicht immer problemlos zu ersehen, ob eine korrekt verriegelte Rastverbindung zustande gekommen ist.

Es sind Rastverbindungen bekannt, die bei Nichtzustandekommen einer Rastverbindung die Bauteile wieder auseinanderdrücken, so daß eine optische Kontrolle möglich ist. Diese Rastverbindungen sind aber aufwendig in der Fertigung. Außerdem ist bei Rastverbindungen an schlecht einsehbaren Stellen eine optische Kontrolle nicht immer möglich. Viele Rastverbindungen erzeugen im Moment des Einrastens ein Geräusch, das zu einer akustische Kontrolle herangezogen werden kann. Aufgrund des Geräuschpegels z.B. in einer Werkhalle ist eine derartige akustische Rückmeldung aber oft nur schwer wahrzunehmen.

In der WO 98/29283 ist ein Gurtschloß gezeigt, in der eine Steckzunge verrastet ist. And der Steckzunge ist ein Transponder als elektronisches Kontrollmittel befestigt, der die Identität des Sicherheitsgurts überträgt. So kann festgestellt werden, ob die Zunge im richtigen Schloß eingesteckt ist.

Aufgabe der Erfindung ist es, eine Möglichkeit zu schaffen, um sicher nachweisen zu können, daß eine korrekt verriegelte Rastverbindung zustande gekommen ist.

Dies wird durch eine Baugruppe mit den Merkmalen des Anspruchs 1 erreicht. Die Erfindung erlaubt eine sichere Kontrolle einer korrekt verriegelten Rastverbindung, indem das Kontrollmittel nur entfernt werden kann, wenn die Rastverbindung tatsächlich korrekt zustande gekommen ist. Im kritischen nicht korrekt verriegelten Zustand, in dem eine optische Unterscheidung vom korrekt verriegelten Zustand nur schwer möglich ist, da sich die Rastelemente bereits sehr nahe sind und sich meist schon berühren, sich also unmittelbar vor dem korrekt verriegelten Zustand befinden, ist das Kontrollmittel blockiert, so daß es nicht aus der Baugruppe entfernt werden kann. Erfindungsgemäß kann überprüft werden, ob bereits eine korrekte Rastverbindung zustande gekommen ist, indem versucht wird, das Kontrollmittel zu entfernen. Dies ist nur dann möglich, wenn sich die Baugruppe im korrekt verriegelten Zustand befindet. Das Kontrollmittel ist ein separates Teil, das allenfalls temporär an einem Rastmittel befestigt ist.

Ein weiterer Vorteil der erfindungsgemäßen Baugruppe liegt darin, daß sie einen Nachweis für eine erfolgte Qualitätskontrolle liefern kann. Durch das entfernte Kontrollmittel, das z.B. eine Codierung aufweisen kann, durch die eine Zuordnung zu einer bestimmten Baugruppe möglich ist, ergibt sich dann der Nachweis dafür, daß eine korrekt gefertigte Baugruppe ausgeliefert wurde.

Bevorzugt sind die Baugruppe und das Kontrollmittel so ausgelegt, daß das Kontrollmittel im verriegelten Zustand der Baugruppe zerstörungsfrei aus der Baugruppe entfembar ist. Auf diese Weise bleiben keine Teile des Kontrollmittels in der fertigen Baugruppe zurück.

Bevorzugt ist das Kontrollmittel in einem unverriegelten Zustand, in dem sich die Rastelemente noch nicht berühren, sowie auch im nicht korrekt verriegelten Zustand an einem der beiden Bauteile befestigt und wird erst durch das Entfernen im korrekt verriegelten Zustand von diesem Bauteil gelöst.

Vorteilhaft ist das Kontrollmittel in einer Signalfarbe ausgeführt, so daß die Zugriffszeit kurz gehalten wird und sichergestellt ist, daß kein Kontrollmittel übersehen wird.

In einer bevorzugten Ausführungsform der Erfindung ist das Kontrollmittel ein Band. Das Band ist bevorzugt so an einem der Bauteile befestigt, daß es an einer Stelle nach außen aus der Baugruppe herausragt, so daß es bei der Kontrolle aus der Baugruppe herausgezogen werden kann.

In einer Weiterbildung der Erfindung weist das Kontrollmittel eine Ausnehmung, z.B. eine Öffnung, auf, in die ein Abschnitt eines der Rastelemente im nicht korrekt verriegelten Zustand eingreift. Das Band ist somit gegen ein Abziehen blockiert, solange die Rastverbindung nicht korrekt verriegelt ist.

In einer anderen Ausführungsform der Erfindung ist das Kontrollmittel als Stift ausgebildet, der z.B. von einem der Rastelemente erst dann freigegeben wird, wenn die Rastverbindung korrekt verriegelt ist.

Das Kontrollmittel kann natürlich auch auf eine andere geeignete Art ausgebildet sein. Es kann alternativ auch in der Baugruppe, bzw. an einem der Bauteile verklemmt sein oder zusätzlich an bestimmten Stellen an der Baugruppe, bzw. an einem der Bauteile z.B. durch Kleben befestigt sein. Um das hier dargelegte erfindungsgemäße Prinzip umzusetzen, sind auch andere Methoden der Blockierung und der Freigabe des Kontrollmittels denkbar.

Wenn die Baugruppe mehrere Paare von Rastelementen aufweist, ist vorteilhafterweise jedem Paar ein Kontrollmittel zugeordnet. So läßt sich auf einfache Weise die korrekte Verriegelung jeder der notwendigen Rastverbindungen überprüfen. Gerade in diesem Fall ist die Erfindung besonders nützlich, da bei mehreren Rastverbindungen an einer Baugruppe es oft eine korrekt verriegelte Rastverbindung erschwert, andere nicht korrekt verriegelte Rastverbindungen zu erkennen.

In einer bevorzugten Ausführungsform der Erfindung ist eines der Bauteile ein Lenkrad und das andere Bauteil ein Gassackmodul. Hier wiederum ist bevorzugt, wenn eines der Rastmittel ein Rasthaken und das andere Rastmittel eine Feder ist. Beim Einsetzen eines Gassackmoduls in ein Lenkrad ist es aus Sicherheitsgründen von besonderer Wichtigkeit, daß die Rastverbindung korrekt verriegelt ist. Dank der Erfindung lassen sich einfach gestaltete, robuste und sichere Rastmechanismen einsetzen, da die Kontrolle der korrekt ausgeführten Rastverbindung durch das Kontrollmittel bewerkstelligt wird.

Bevorzugt ist das Kontrollmittel in einem Zustand, in dem die Rastelemente einander noch nicht kontaktieren, an einem der Bauteile positionsfest gehaltert, und beim Kontaktieren und Verschieben der Rastelemente in Richtung des korrekt verriegelten Zustands erfaßt eines der Rastelemente das Kontrollmittel und gibt es bei Erreichen des korrekt verriegelten Zustands wieder frei. So läßt sich auf einfache Weise erreichen, daß das Kontrollmittel nur bei korrekt verriegelter Rastverbindung entfernt werden kann.

Bevorzugt erfaßt das Rastelement das Kontrollmittel unter Bildung eines Formschlusses.

Das Kontrollmittel kann im Zustand, in dem die Rastelemente einander noch nicht kontaktieren, vorteilhaft durch Kleben am zugeordneten Bauteil befestigt sein.

Weitere Vorteile und Merkmale der Erfindung gehen aus der nachfolgenden Beschreibung eines Ausführungsbeispiels hervor, mit Bezug auf die beigefügten Zeichnungen. In diesen zeigen:
- Figur 1 eine schematische Draufsicht auf ein Lenkrad mit einem Gassackmodul als Beispiel einer erfindungsgemäßen Baugruppe;
- Figur 2 einen schematischen Schnitt durch die Baugruppe aus Figur 1 im nicht korrekt verriegelten Zustand; und
- Figur 3 einen schematischen Schnitt durch die Baugruppe aus Figur 1 im korrekt verriegelten Zustand.

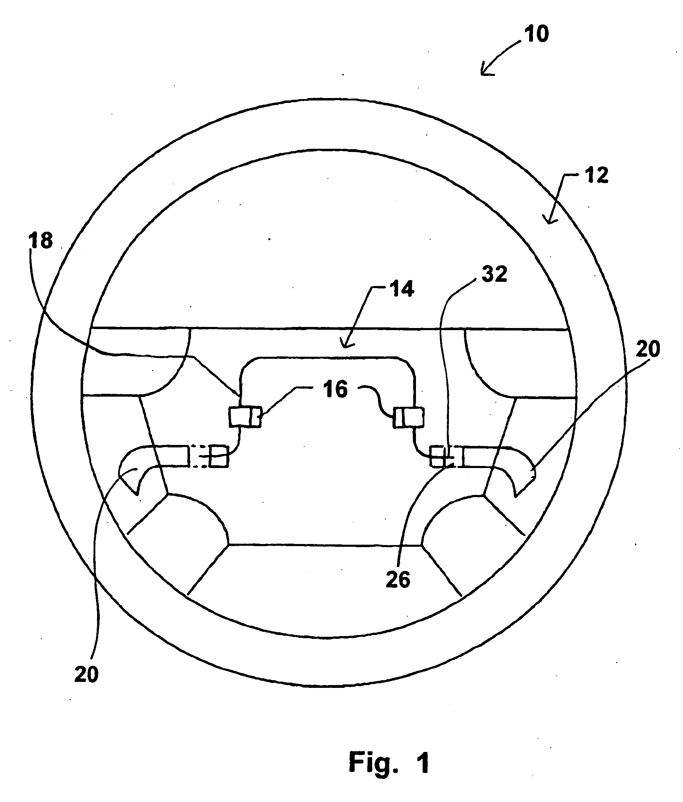

Figur 1 zeigt eine Baugruppe 10 aus einem ersten Bauteil, das in diesem Fall durch ein Lenkrad 12 gebildet ist, und einem zweiten Bauteil, in diesem Fall einem Gassackmodul 14. Das Lenkrad 12 weist ein mit diesem verbundenes erstes Rastelement auf, das im hier gezeigten Beispiel ein einstückig mit dem Lenkrad verbundener Rasthaken 16 ist. Das Gassackmodul 14 weist ein zweites Rastelement auf, das im hier gezeigten Beispiel als Schenkelfeder 18 ausgebildet ist.

Insgesamt können das Lenkrad 12 und das Gassackmodul 14 im hier gezeigten Beispiel zwei Rastverbindungen eingehen. Hierzu sind am Lenkrad 12 zwei Rasthaken 16 ausgebildet, die jeweils auf bekannte Weise hinter einen Abschnitt der Schenkelfeder 18 einrasten können. Die Schenkelfeder 18 weist hierzu einen gewissen Bewegungsspielraum auf.

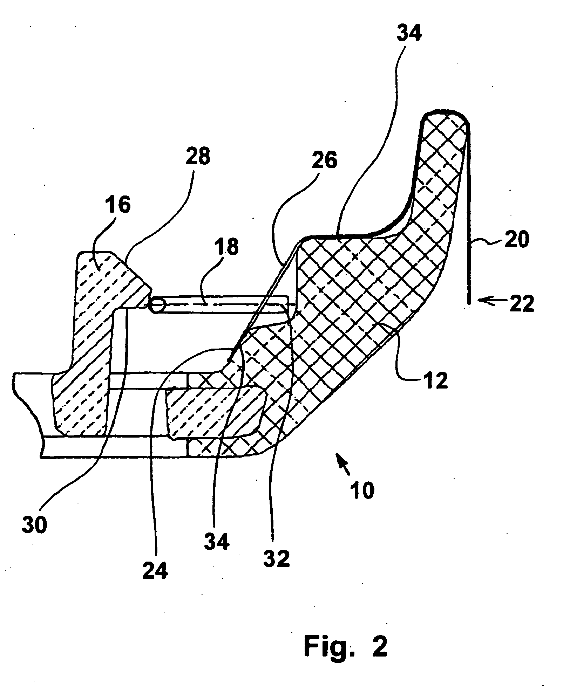

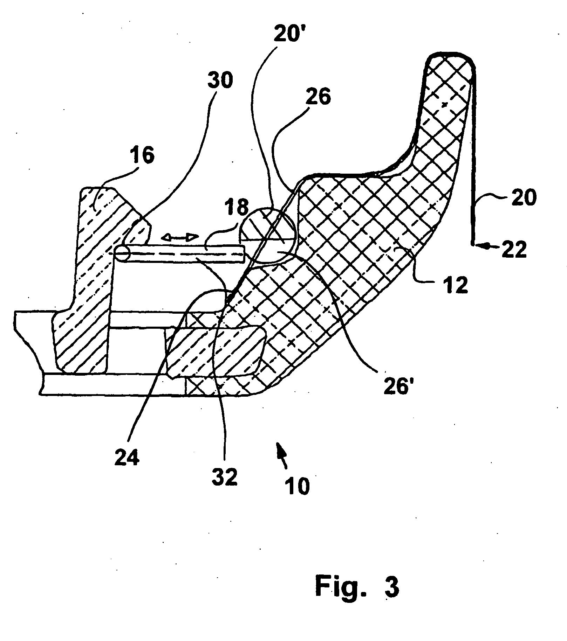

In der Baugruppe 10 ist für jeden der Rasthaken 16 ein Kontrollmittel angeordnet, das in diesem Beispiel aus einem flexiblen Band 20 besteht. Das Band 20 ist so angeordnet, daß sein eines Ende 22 aus der Baugruppe herausragt, während sein zweites Ende 24 im Inneren der Baugruppe angeordnet ist (siehe Fign.2 und 3). In der Nähe des zweiten Endes 24 weist das Band 20 eine Öffnung 26 auf.

Figur 2 zeigt die Baugruppe 10 in einem nicht korrekt verriegelten Zustand. Der Rasthaken 16 und die Schenkelfeder 18 befinden sich in unmittelbarer Nähe zueinander und berühren sich bereits. Die Schenkelfeder 18 ist an der Anlaufschräge 28 des Rasthakens 16 entlang geglitten, so daß sie bereits durch den Rasthaken 16 ausgelenkt ist, sie ist jedoch noch nicht an der Rastfläche 30 des Rasthakens 16 zur Anlage gekommen, so daß die Rastverbindung noch nicht hergestellt ist.

In der im nicht korrekt verriegelten Zustand eingenommenen Position ragt ein Ende 32 der Schenkelfeder 18 in die Öffnung 26 des Bands 20. Dies blockiert das Band 20 gegen Abziehen vom Ende 22 her, so daß sich das Band 20 nicht aus der Baugruppe 10 entfernen läßt.

Im hier gezeigten Beispiel ist das Band 20 an geeigneten Stellen 34 mit dem Lenkrad 12 verbunden, z.B. durch eine bei geringer Kraft lösbare Aufnahme in einer Schaumkontur des Lenkrads oder durch eine Klebung. Die Befestigung an den Stellen 34 dient lediglich dazu, das Band 20 vor dem Abziehen in seiner gewünschten Position zu halten.

Figur 3 zeigt die Baugruppe 10 im korrekt verriegelten Zustand. Jetzt liegt die Schenkelfeder 18 an der Rastfläche 30 des Rasthakens 16 an. In dieser Position gibt das Ende 32 der Schenkelfeder 18 die Öffnung 26 des Bands 20 frei, so daß dieses zerstörungsfrei durch Zug am Ende 22 aus der Baugruppe 10 entfernt werden kann.

Durch die Erfindung wird zum einen sichergestellt, daß eine korrekte Verriegelung der Rastverbindung zwischen dem ersten und dem zweiten Bauteil erfolgt ist. Gleichzeitig wird durch die Erfindung auch ein Nachweis dafür bereitgestellt, daß diese Rastverbindung korrekt zustande gekommen ist, da jedes aus der Baugruppe entfernte, unbeschädigte Kontrollmittel für eine korrekte Rastverbindung zwischen zwei Rastelementen steht.

Wenn, wie in Figur 1 gezeigt, in der Baugruppe mehrere Rastverbindungen vorgesehen sind, ist es sinnvoll, jeder dieser Rastverbindungen ein separates Kontrollmittel zuzuordnen, es ist aber auch denkbar, nur ein einziges Kontrollmittel vorzusehen.

Das geschilderte Ausführungsbeispiel soll lediglich das Prinzip der Erfindung verdeutlichen. Die Blockierung und Freigabe des Kontrollmittels kann auch auf andere als die beschriebene Weise erfolgen. Das Kontrollmittel kann z.B. auch als Stift 20' ausgebildet sein (Figur 3), der z.B. eine Ausnehmung 26' an seiner Unterseite aufweisen kann, wobei der Stift 20' freigegeben wird, wenn sich die Baugruppe im korrekt verriegelten Zustand befindet. Das Kontrollmittel könnte z.B. auch nicht durch das Rastelement selbst, sondern durch ein weiteres Bauteil blockiert werden, wobei auch eine Blockierung durch eine Klemmung denkbar ist.

## Patentansprüche

1. Baugruppe aus einem ersten Bauteil (12) mit wenigstens einem ersten Rastelement (16) und aus einem zweiten Bauteil (14) mit wenigstens einem zweiten Rastelement (18),
wobei das erste und das zweite Bauteil (12, 14) so gegeneinander bewegbar sind, daß das erste und das zweite Rastelement (16, 18) eine Rastverbindung eingehen können,
wobei die Baugruppe (10) einen nicht korrekt verriegelten Zustand einnehmen kann, in dem, sich das erste und das zweite Rastelement (16, 18) in unmittelbare Nähe zueinander befinden, aber noch keine Rastverbindung eingegangen sind, und
einen korrekt verriegelten Zustand, in dem das erste und das zweite Rastelement (16, 18) eine Rastverbindung eingegangen sind,
wobei ein Kontrollmittel (20) in die Baugruppe integriert ist,
das Kontrollmittel (20), das erste und das zweite Bauteil (12, 14) und das erste und das zweite Rastelement (16, 18) so ausgebildet und so aufeinander abgestimmt sind, daß das Kontrollmittel (20) nicht aus der Baugruppe (10) entfernbar ist, wenn sich die Baugruppe (10) im nicht korrekt verriegelten Zustand befindet, und
das Kontrollmittel (20) aus der Baugruppe (10) entfernbar ist, wenn sich die Baugruppe (10) im korrekt verriegelten Zustand befindet.

2. Baugruppe nach Anspruch 1, **dadurch gekennzeichnet, daß** das Kontrollmittel (20) in einem unverriegelten Zustand, in dem sich die beiden Bauteile nicht berühren, an einem der Bauteile (12, 14) befestigt ist.

3. Baugruppe nach einem der vorhergehenden Ansprüche, **dadurch gekennzeichnet, daß** das Kontrollmittel (20) ein Band oder Stift ist.

4. Baugruppe nach einem der vorhergehenden Ansprüche, **dadurch gekennzeichnet, daß** das Kontrollmittel (20) eine Ausnehmung (26) aufweist, in die ein Abschnitt (32) eines der Rastelemente (18) im nicht korrekt verriegelten Zustand eingreift.

5. Baugruppe nach einem der vorhergehenden Ansprüche, **dadurch gekennzeichnet, daß** die Baugruppe (10) mehrere Paare von Rastelementen (16, 18) aufweist und daß jedem Paar ein Kontrollmittel (20) zugeordnet ist.

6. Baugruppe nach einem der vorhergehenden Ansprüche, **dadurch gekennzeichnet, daß** eines der Bauteile (12) ein Lenkrad und das andere Bauteil (14) ein Gassackmodul ist.

7. Baugruppe nach einem der vorhergehenden Ansprüche, **dadurch gekennzeichnet, daß** eines der Rastelemente (16) ein Rasthaken und das andere Rastelement (18) eine Feder ist.

8. Baugruppe nach einem der vorhergehenden Ansprüche, **dadurch gekennzeichnet, daß** das Kontrollmittel (20) in einem Zustand, in dem die Rastelemente einander noch nicht kontaktieren, an einem der Bauteile (12, 14) positionsfest gehaltert ist und daß beim Kontaktieren und Verschieben der Rastelemente (16, 18) in Richtung des korrekt verriegelten Zustands eines der Rastelemente (18) das Kontrollmittel (20) erfaßt und es bei Erreichen des korrekt verriegelten Zustands wieder freigibt.

9. Baugruppe nach Anspruch 8, **dadurch gekennzeichnet, daß** das Rastelement (18) das Kontrollmittel (20) unter Bildung eines Formschlusses erfaßt.

10. Baugruppe nach einem der Ansprüche 8 und 9, **dadurch gekennzeichnet, daß** das Kontrollmittel (20) im Zustand, in dem die Rastelemente einander noch nicht kontaktieren, durch Kleben am zugeordneten Bauteil befestigt ist.

## Claims

1. An assembly comprised of a first component (12) with at least one first detent element (16), and a second component (14) with at least one second detent element (18),
the first and second components (12, 14) being movable with respect to each other such that the first and second detent elements (16, 18) can form a detent connection,
the assembly (10) being able to assume a not correctly locked state in which the first and second detent elements (16, 18) are in immediate vicinity of each other, but have not yet formed a detent connection,
a correctly locked state in which the first and second detent elements (16, 18) have formed a detent connection,
a checking means (20) being integrated into the assembly,
the checking means (20), the first and second components (12, 14) and the first and second detent elements (16, 18) being constructed and coordinated with each other such that the checking means (20) is not removable from the assembly (10) when the assembly (10) is in the not correctly locked state, and
the checking means (20) is removable from the assembly (10) when the assembly (10) is in the correctly locked state.

2. The assembly according to Claim 1, **characterized in that** the checking means (20), in an unlocked state in which the two components are not touching each other, is fastened to one of the components (12, 14).

3. The assembly according to any of the preceding claims, **characterized in that** the checking means (20) is a band or a pin.

4. The assembly according to any of the preceding claims, **characterized in that** the checking means (20) has a recess (26) into which a section (32) of one of the detent elements (18) engages in the not correctly locked state.

5. The assembly according to any of the preceding claims, **characterized in that** the assembly (10) has several pairs of detent elements (16, 18) and that one checking means (20) is associated with each of the pairs.

6. The assembly according to any of the preceding claims, **characterized in that** one of the components (12) is a steering wheel and the other component (14) is a gas bag module.

7. The assembly according to any of the preceding claims, **characterized in that** one of the detent elements (16) is a detent hook and the other detent element (18) is a spring.

8. The assembly according to any of the preceding claims, **characterized in that** the checking means (20) is secured in position on one of the components (12, 14) in a state in which the detent elements are not yet in contact with each other, and that upon a contact between and displacement of the detent elements (16, 18) towards the correctly locked state, one of the detent elements (18) engages the checking means (20) and releases it again on reaching the correctly locked state.

9. The assembly according to Claim 8, **characterized in that** the detent element (18) engages the checking means (20) so as to form an interlocking fit.

10. The assembly according to any of Claims 8 and 9, **characterized in that** the checking means (20) is fastened to the associated component by gluing in the state in which the detent elements are not yet in contact with each other.

## Revendications

1. Ensemble constitué par un premier composant (12) avec au moins un premier élément d'enclenchement (16) et par un deuxième composant (14) avec au moins un deuxième élément d'enclenchement (18),
le premier composant (12) et le deuxième composant (14) étant déplaçables l'un contre l'autre de telle sorte que le premier élément d'enclenchement (16) et le deuxième élément d'enclenchement (18) peuvent se relier par enclenchement,
l'ensemble (10) pouvant occuper un état non correctement verrouillé dans lequel le premier élément d'enclenchement (16) et le deuxième élément d'enclenchement (18) se trouvent à proximité directe l'un de l'autre, mais ne sont pas encore reliés par enclenchement, et
un état correctement verrouillé dans lequel le premier élément d'enclenchement (16) et le deuxième élément d'enclenchement (18) sont reliés par enclenchement,
un moyen de contrôle (20) étant intégré dans l'ensemble,
le moyen de contrôle (20), le premier composant (12) et le deuxième composant (14) et le premier élément d'enclenchement (16) et le deuxième élément d'enclenchement (18) étant réalisés et adaptés de telle sorte les uns aux autres que le moyen de contrôle (20) ne peut pas être enlevé de l'ensemble (10) lorsque l'ensemble (10) se trouve dans l'état non correctement verrouillé, et
le moyen de contrôle (20) pouvant être enlevé de l'ensemble (10) lorsque l'ensemble se trouve dans l'état correctement verrouillé.

2. Ensemble selon la revendication 1, **caractérisé en ce que** dans un état non verrouillé dans lequel les deux composants ne se touchent pas, le moyen de contrôle (20) est fixé sur l'un des composants (12, 14).

3. Ensemble selon l'une des revendications précédentes, **caractérisé en ce que** le moyen de contrôle (20) est un ruban ou une pointe.

4. Ensemble selon l'une des revendications précédentes, **caractérisé en ce que** le moyen de contrôle (20) présente un évidement (26) dans lequel s'engage un tronçon (32) d'un des éléments d'enclenchement (18) à l'état non correctement verrouillé.

5. Ensemble selon l'une des revendications précédentes, **caractérisé en ce que** l'ensemble (10) présente plusieurs paires d'éléments d'enclenchement (16, 18) et **en ce qu'**à chaque paire est associé un moyen de contrôle (20).

6. Ensemble selon l'une des revendications précédentes, **caractérisé en ce que** l'un des composants (12) est un volant de direction et l'autre composant (14) est un module de coussin à gaz.

7. Ensemble selon l'une des revendications précédentes, **caractérisé en ce que** l'un des éléments d'enclenchement (16) est un crochet d'enclenchement et l'autre élément d'enclenchement (18) est un ressort.

8. Ensemble selon l'une des revendications précédentes, **caractérisé en ce que** dans un état dans lequel les éléments d'enclenchement ne sont pas encore en contact l'un avec l'autre, le moyen de contrôle (20) est maintenu fermement en position sur l'un des composants (12, 14) et **en ce que** lors de la venue en contact et du déplacement des éléments d'enclenchement (16, 18) en direction de l'état correctement verrouillé, l'un des éléments d'enclenchement (18) saisit le moyen de contrôle (20) et le libère de nouveau lorsque l'état correctement verrouillé est atteint.

9. Ensemble selon la revendication 8, **caractérisé en ce que** l'élément d'enclenchement (18) saisit le moyen de contrôle (20) par coopération de formes.

10. Ensemble selon l'une des revendications 8 et 9, **caractérisé en ce que** dans l'état dans lequel les éléments d'enclenchement ne sont pas encore en contact l'un avec l'autre, le moyen de contrôle est fixé par collage au composant associé.
